Europäisches Patentamt

European Patent Office

Office européen des brevets

(11) Publication number: **0 049 963**
**B1**

(12)

# EUROPEAN PATENT SPECIFICATION

(45) Date of publication of patent specification: **14.08.85**

(21) Application number: **81304387.4**

(22) Date of filing: **23.09.81**

(51) Int. Cl.⁴: **G 07 F 13/10, A 47 J 31/40**

(54) **Beverage vending machine.**

(30) Priority: **15.10.80 GB 8033260**

(43) Date of publication of application:
**21.04.82 Bulletin 82/16**

(45) Publication of the grant of the patent:
**14.08.85 Bulletin 85/33**

(84) Designated Contracting States:
**DE FR GB IT NL**

(56) References cited:
**DE-A-2 346 324**
**GB-A-1 079 758**
**GB-A-1 321 748**
**GB-A-2 013 622**
**US-A-3 012 701**
**US-A-4 191 101**

(73) Proprietor: **COLDFLOW LIMITED**
**Rawson Spring Way Riverdale Industrial Estate**
**GB-Sheffield S6 1PD (GB)**

(72) Inventor: **Bellamy, Alan**
**2 School Hill Cutthorpe**
**Chesterfield Derbyshire (GB)**

(74) Representative: **Ford, Michael Frederick et al**
**MEWBURN ELLIS & CO. 2/3 Cursitor Street**
**London EC4A 1BQ (GB)**

Courier Press, Leamington Spa, England.

## Description

The invention relates to vending machines of the kind for dispensing a selection of beverages, the beverages being prepared by an appropriate quantity of powdered or granular material being mixed with hot or cold water as required. Such beverages selectable by appropriate push buttons, may be, for example, tea, coffee, hot chocolate, soup and a variety of soft drinks, and in the case of tea and coffee, for example, a consumer can also select the addition of sugar and/or milk, when required, according to his particular preference.

Previously known vending machines of this kind have generally included funnels or bowls in which the selected ingredients have been mixed with water and although the machine has been programmed so that the funnel or bowl concerned is flushed out with clean water following each serving of beverage, the flushing water reducing the strength of the beverage to the required palatable strength, this has not been altogether satisfactory and it has sometimes been found that a dispensed beverage has been tainted by a residue of the previously dispensed beverage. For this reason, and for reasons of hygiene, it has generally been necessary for the mixing funnels or bowls and dispense nozzles of such previously known vending machines to be cleaned daily. This has been both inconvenient and costly.

In a previous attempt to solve this problem it has been proposed to provide, instead of a common mixing funnel of bowl, a plurality of paper or synthetic plastics cups each of which has been pre-loaded with an appropriate quantity of powdered or granular material according to the beverage which is to be provided. It has in fact been known to provide a selection of such disposable cups pre-loaded with different ingredients but although such machines have worked reasonably well they obviously cannot, for reasons of available space and complexity, provide the wide range of available beverages which can be obtained in a machine having a selection of push buttons for added ingredients such as sugar and milk. In other words, they have not been able to provide the number of permutations which it is desirable to provide in a beverage vending machine.

In another previous attempt to solve the problem referred to, it has been proposed to provide a vending machine having at least one container dispensing station for dispensing individual containers from a stack or store thereof, and a plurality of ingredients dispensing stations, said machine comprising a conveyor having a carriage and associated support means adapted and arranged to receive and support a container at the said container dispensing station and to present said container sequentially at each ingredient dispensing station and control means provided for causing or allowing said container to receive a portion of at least one ingredient and a discharge station where the container together with the ingredients is discharged from the support means of the conveyor wherein on disengagement of the container from the support means the conveyor is reversed to return the carriage to a datum position. Such a machine obviously does not suffer from the problem of a dispensed beverage having been tainted by a residue of a previously dispensed beverage and, depending on the number of dispensing stations provided, is capable of providing a wide range of available beverages. However, because the conveyor need to be reversed to return the carriage to a datum position a number of servings cannot be obtained in a very short space of time. This is because a container cannot commence its traverse along the support means to be presented sequentially at each ingredient dispensing station, until the immediately preceeding container has been discharged from the support means and the carriage has been returned to the datum position.

The invention as claimed is intended to remedy the above drawbacks. It solves the problem of how to design a beverage vending machine in which the mixing of the beverage takes place in the disposable cup in which it is to be served whilst at the same time the machine is capable of providing a wide range of available beverages and of delivering a number of selected beverages in a very short space of time.

The advantages offered by the invention are mainly that the beverages dispensed are not tainted by a residue of previously dispensed beverages, that the range of beverages available is not unduly limited, and that a number of servings can be dispensed in a very short space of time.

In order that the invention may be fully understood and readily carried into effect, the same will now be described, by way of example only, with reference to the accompanying drawings of which:—

Figure 1 is a perspective view of a beverage vending machine a part of a side wall of which has been shown broken away from clarity,

Figure 2 is a plan view of a cup transport arrangement forming part of the machine,

Figure 3 is a view in the direction of arrow 3 in Figure 1, and

Figure 4 is a view on the line 4—4 in Figure 2.

Referring now to the drawings, the beverage vending machine there illustrated is contained within a cabinet 10 a part of a side wall of which is shown broken away so that part of the internal mechanism can be seen. As shown, the machine is provided with a magazine 12 of disposable cups 14, the magazine being constituted by an indexable head having a plurality of locations for separate stacks of cups, means (not shown) being provided for bringing about an indexing movement of the head when a sensing device (not shown) senses exhaustion of a stack of cups at a position indicated 16 from which the cups are fed in turn.

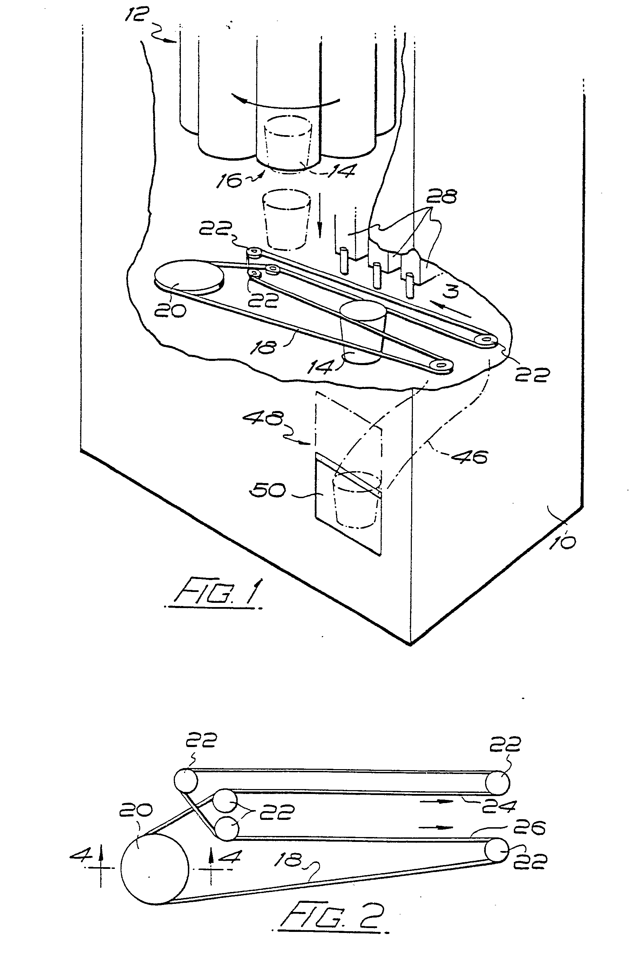

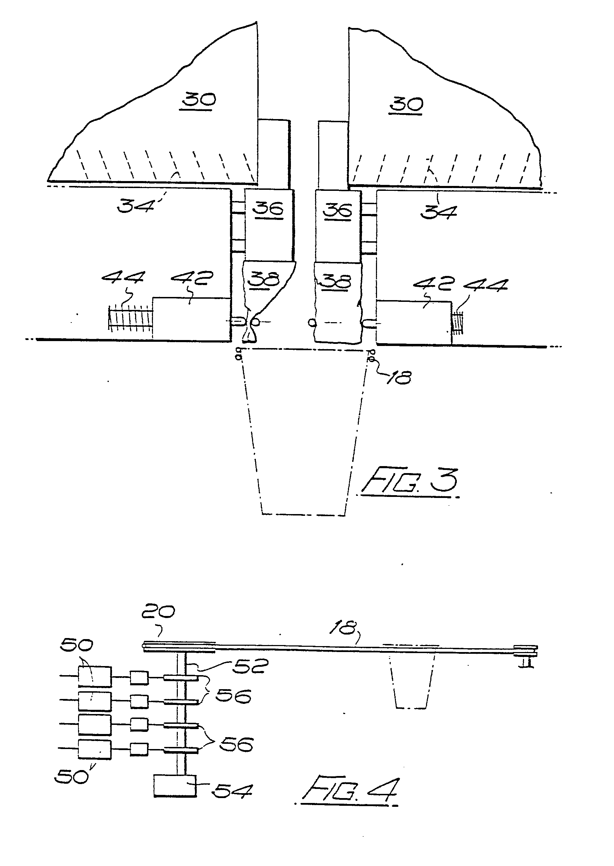

The machine is also provided with means for feeding a disposable cup from the magazine of cups in increments of movement through successive loading stations in turn, that is to say through successive positions in which the cups will be charged with pre-selected powdered or granular materials. These means include an endless band or belt 18 which encircles a drive pulley 20 and a plurality of idler pulleys 22 so arranged that, as best seen in Figure 2, the belt has parallel runs 24, 26 moving in one direction as indicated by the arrows. The arrangement is such that a cup released from the magazine can fall between the parallel runs of endless band or belt and by virtue of the usual taper of the cup (and the usual bead formed around its upper edge), and of the appropriate spacing of said runs of bands or belt, can jam between them to be carried to the loading stations in turn.

Units of dispensing apparatus for the powdered or granular materials constituting concentrates of the available beverages and for sugar and powdered milk are located, respectively, above the successive loading stations referred to and are generally indicated 28. For economy of space the separate units are arranged side by side and in oppositely disposed pairs (but for the sake of clarity only those at one side of the parallel runs of endless band or belt are shown in Figure 1). Each unit includes a material canister 30, a holding chamber generally indicated 32 for a measure of the material concerned, said holding chamber being secured to a side wall of the canister 30, and means for metering a correct measure of the material from the material canister into said holding chamber, said means being constituted by a screw conveyor 34 arranged to displace material through an aperture in the side wall of the canister. The holding chamber is constituted by a synthetic plastics body part 36 with a cylindrical aperture opening from its underside and by a length of flexible tube 38 which depends from said body part and form a lower portion of said holding chamber. The lower end of the length of flexible tube 38 is normally clamped shut by clamping means generally indicated 40. An electric solenoid 42 is provided for releasing the clamping means 40 against the pressure of a spring 44.

When a disposable cup reaches the end of the track constituted by the parallel runs 24, 26 of band or belt, having passed through the loading stations and, at least at one of said loading stations, been charged with a measure of powdered or granular material, it falls down a chute 46 to arrive at a delivery station 48. Means (not shown) are provided at said delivery station for the charging of the cup with hot water (and of course if one of the beverages which can be selected is a cold fruit drink, for example, the machine will additionally be provided with means for charging a cup with cold water where appropriate). A sliding window 50 gives access to the delivery station so that when the cup has been charged with water and the pre-selected beverage has been produced the user can raise the window and extract the disposable cup containing his pre-selected beverage.

The control means for the machine, that is to say the push buttons for pre-selecting a required beverage, the various electric motors, relays and the like by means of which the separate functions referred to above are brought into action in timed sequence, are largely of a kind well known to those skilled in the art. However, in Figure 4, there is illustrated the manner in which the disposable cups are arranged to pause at pre-selected locations along the track on which they travel, that is to say at those locations where they are to be charged with the pre-selected powdered or granular materials. As shown, a drive shaft 52 on which the drive pulley 20 is mounted is driven at its lower end by a geared down electric motor unit 54. Intermediate its ends the drive shaft is provided with a number of cams 56 corresponding to the total number of loading stations along the track, the drive pulley 20 being of such a circumference that the follower of each cam is arranged to be actuated when a disposable cup reaches a particular loading station. The cam followers are arranged to activate respective relays, generally indicated 58 but only those which have been pre-selected for activation interrupt the operation of the motor unit at the appropriate times. The relays are associated with respective timers so that the motor unit is re-started after an appropriate interval of time.

By virtue of the fact that the machine does not include funnels or bowls in which successive servings of a particular beverage are mixed it has been found that it does not need the frequent cleaning which previously known vending machines have required. In fact, the material canisters 30 have been made so large, and the magazine of disposable cups has been made of such a capacity that, typically, a service engineer may need to visit such as machine to clean and replenish it only weekly instead of daily as might be required with a previously known machine.

Various modifications may be made. For example, different means may be provided whereby the disposable cups are displaced along the track in turn. It will also be understood that the track need not necessarily be a straight line track. It is not essential that the units of dispensing apparatus for the powdered or granular materials concerned should be as described and illustrated, that is to say they need not each include separate holding chambers for a required measure of the material concerned. The dispensing apparatus in each case could be of a more conventional kind. The disposable cups, when charged with the pre-selected powdered or granular material, need not necessarily fall down a chute to arrive at the delivery station. The latter could be constituted by the final position of a cup beyond the end of the track along which it has moved to be charged with the material. It is however, usually essential for any moving parts of a machine of this kind to be inaccessible to persons using the machine.

A machine of this kind will usually only be provided for the serving of hot beverages such as tea, coffee, soup and the like. However, it could quite well be programmed for the serving of chilled beverages in addition to hot beverages and in this case the machine could be provided with a cold water tank with a so-called "ice-bank" if desired.

## Claims

1. A vending machine for dispensing a selection of beverages, the beverages being prepared by an appropriate quantity of powdered or granular material being mixed with hot and cold water as required, the machine being provided with a magazine (12) of disposable cups (14) and means for feeding said cups (14) in increments of movement through successive loading stations to a delivery station (48) each cup (14) being charged with pre-selected ingredients at the appropriate loading stations from separate units of dispensing apparatus and subsequently charged with hot or cold water at or immediately before the delivery station, characterised in that the means for feeding the cups in turn, in increments of movement through the successive loading stations to the delivery station (48) are constituted by uni-directional support means whereby a cup can commence its traverse along the support means, to be presented sequentially at each loading station, before an immediately preceding cup has completed its traverse along said support means, the uni-directional support means being constituted by an endless band or belt (18) having parallel runs (24, 26) moving in one direction, the arrangement being such that a cup (14) released from the magazine (12) can fall between said parallel runs (24, 26) of endless band or belt (18) and by virtue of the usual taper of the cup (14) and the appropriate spacing of said runs of band or belt (18) can jam between them to be carried to the loading stations and to the delivery station.

2. A vending machine according to claim 1, further characterised in that the endless band or belt is driven by a drive pulley (20) mounted on a drive shaft (52) driven by an electric motor unit (54), the drive shaft being provided with a number of cams (56) corresponding to the total number of loading stations along the track constituted by the parallel runs of endless band or belt, the drive pulley (20) being of such a circumference that a follower of each cam is arranged to be actuated when a disposable cup reaches a respective loading station, the cam followers being arranged in order to interrupt the operation of the motor unit, to activate respective relays (58) which have been pre-selected for activation by the user having pressed appropriate push buttons to preselect the required beverage, the relays being associated with respective timers so that the motor unit is re-started after an appropriate interval of time and also associated with means for causing the appropriate units of dispensing apparatus to dispense measures of powdered or granular material.

3. A vending machine according to either one of the preceding claims, further characterised in that the magazine (12) of disposable cups is constituted by an indexable head having a plurality of locations for separate stacks of cups (14) means being provided for bringing about an indexing movement of the head when a sensing device senses exhaustion of a stack of cups (14) at a position (16) from which the cups (14) are fed in turn.

4. A vending machine according to any one of the preceding claims, further characterised in that the separate units of dispensing apparatus (28) for the powdered or granular materials each include a material canister (30), a holding chamber (32) for a measure of the material, means for metering a correct measure of the material from the material canister (30) into said holding chamber (32), and means for opening the underside of said holding chamber (32) when a disposable cup (14) has been brought into position beneath it so that the measure of material can fall from said holding chamber (32) under the force of gravity.

5. A vending machine according to claim 4, further characterised in that the means for dispensing a correct measure of the material from the material canister (30) into the holding chamber (32) includes a screw conveyor (34).

6. A vending machine according to either one of claims 4 and 5, further characterised in that the means for opening the underside of the holding chamber (32) so that the measure of material can fall therefrom under the force of gravity are constituted by means for releasing a clamping pressure on a lower end of a flexible hose (38) forming a lower portion of said holding chamber (32).

7. A vending machine according to claim 6, further characterised in that the means for releasing a clamping pressure on a lower end of the flexible tube (38) forming a lower portion of the holding chamber (32) are actuated by an electric solenoid (42).

## Patentansprüche

1. Verkaufsautomat zur Abgabe einer Auswahl von Getränken, wobei die Getränke aus einer entsprechenden Menge eines pulverigen oder körnigen Materials hergestellt werden, das mit heißem oder kaltem Wasser vermischt wird, wobei der Automat mit einem Magazin (12) für Einweg-Becher (14) und mit einer Einrichtung zum Zuführen der Becher (14) in schrittweisen Bewegungen durch aufeinanderfolgende Füllstationen zu einer Abgabestation (48) versehen ist, wobei jeder Becher (14) an den entsprechenden Füllstationen aus getrennten Einheiten einer Abgabevorrichtung mit vorbestimmten Stoffen gefüllt und nachfolgend an oder unmittelbar vor der Abgabestation mit heißem oder kaltem Wasser gefüllt wird, dadurch gekennzeichnet, daß die Einrichtung zum Schrittweisen Bewegen der Becher durch die aufeinanderfolgenden Füllstationen (48) von einer einseitig gerichteten Stützeinrichtung gebildet ist, wodurch ein Becher seine Querbewegung längs der Stützeinrichtung zur aufeinanderfolgenden Anordnung an jeder Füllstation beginnen kann, bevor ein unmittelbar vorhergehender Becher seine Querbewegung längs der Stützeinrichtung beendet hat, wobei die einseitig gerichtete Stützeinrichtung von einem endlosen Band oder Riemen (18) gebildet ist, der in einer Richtung bewegte parallele Abschnitte (24, 26) aufweist, wobei die Anordnung derart ist, daß ein vom Magazin (12) freigegebener Becher (14) zwischen die parallelen Abschnitte (24, 26) des endlosen Bandes oder Riemens (18) fallen kann und sich infolge der üblichen Verjüngung des Bechers (14) und des geeigneten Abstandes der Abschnitte des Bandes oder des Riemens (18) zwischen diesen verklemmen kann, um den Füllstationen und der Abgabestation zugeführt zu werden.

2. Verkaufsautomat nach Anspruch 1, dadurch gekennzeichnet, daß das endlose Band oder der Riemen von einer Riemenscheibe (20) angetrieben ist, die auf einer von einem Elektromotor (54) angetriebenen Antriebswelle (52) angeordnet ist, wobei die Antriebswelle mit Steuerkurven (56) versehen ist, deren Anzahl der Gesamtzahl der Füllstationen entspricht, die längs der von den parallelen Abschnitten des Endlosen Bandes oder Riemens gebildeten Bahn angeordnet sind, wobei die Riemenscheibe (20) einen solchen Umfang hat, daß ein Kurvennachläufer einer jeden Steuerkurve betätigt wird, wenn ein Einweg-Becher eine bestimmte Füllstation erreicht, wobei die Kurvennachläufer in einer solchen Reihenfolge angeordnet sind, daß sie den Elektromotor abschalten, um entsprechende Relais (58) zu betätigen, die vom Benutzer zur Betätigung vorgewählt wurden durch Drücken geeigneter Drucktasten, um das gewünschte Getränk zu wählen, wobei den Relais Zeitglieder zugeordnet sind, so daß der Motor nach einer geeigneten Zeitspanne wieder gestartet wird, sowie Mittel zugeordnet sind, die bewirken, daß die entsprechenden Einheiten der Abgabevorrichtung eine bestimmte Menge des pulverigen oder körnigen Materials abgeben.

3. Verkaufsautomat nach einem der vorhergehenden Ansprüche, dadurch gekennzeichnet, daß das Magazin (12) für die Einweg-Becher von einem drehbaren Kopf gebildet ist, der mehrere Orte für getrennte Stapel von Bechern (14) aufweist, wobei eine Einrichtung vorgesehen ist, die ein Dreheinstellbewegung des Kopfes bewirkt, wenn eine Fühleinrichtung das Aufbrauchen eines Becherstapels (14) an einer Stelle (16) ermittelt, von wo aus die Becher (14) zugeführt werden.

4. Verkaufsautomat nach einem der vorhergehenden Ansprüche, dadurch gekennzeichnet, daß die getrennten Einheiten der Abgabevorrichtung (28) für die pulverigen oder körnigen Materialien jeweils eine Materialbehälter (30), eine Haltekammer (32) für eine bestimmte Menge des Materials, eine Einrichtung zur Abgabe einer bestimmten Menge des Materials vom Materialbehälter (30) in die Haltekammer (32) und eine Einrichtung zum Öffnen der Unterseite einer jeden Haltekammer (32) aufweisen, wenn ein Einweg-Becher (14) unter derselben angeordnet ist, so daß die Materialmenge unter der Schwerkraft aus der Haltekammer (32) herausfallen kann.

5. Verkaufsautomat nach Anspruch 4, dadurch gekennzeichnet, daß die Einrichtung zur Abgabe einer bestimmten Menge des Materials von Materialbehälter (30) in die Haltekammer (32) einen Schneckenförderer (34) aufweist.

6. Verkaufsautomat nach Anspruch 4 oder 5, dadurch gekennzeichnet, daß die Einrichtung zum Öffnen der Unterseite der Haltekammer (32), so daß die Materialmenge aus derselben unter der Schwerkraft herausfallen kann, von einer Einrichtung gebildet ist, um eine Klemmkraft auf ein unteres Ende eines flexiblen Rohres (38) aufzuheben, das einen unteren Bereich der Haltekammer (32) bildet.

7. Verkaufsautomat nach Anspruch 6, dadurch gekennzeichnet, daß die Einrichtung zur Beendigung der auf ein unteres Ende des einen unteren Bereich der Haltekammer (32) bildenden flexiblen Rohres (38) ausgeübten Klemmkraft durch eine Elektromagnet (42) betätigbar ist.

**Revendications**

1. Distributeur automatique pour distribuer un choix de boissons, les boissons étant préparées par une quantité appropriée d'une matière en poudre ou en granulés qui est mélangée à de l'eau chaude ou froide selon ce qui est requis, la machine étant pourvue d'un magasin (12) de coupes jetables (14) et d'un moyen pour l'apport desdites coupes (14) par incréments de mouvement à travers des stations successives de chargement vers une station de décharge (48), chaque coupe (14) étant chargée d'ingrédients présélectionnés aux stations appropriées de chargement, provenant d'unités séparées du dispositif de distribution et subséquemment chargée d'eau chaude ou froide à ou immédiatement avant la station de décharge, caractérisé en ce que les moyens pour l'apport des coupes tour à tour, par incréments de mouvement à travers les stations successives de chargement vers la station de décharge (48) sont constitués d'un moyen unidirectionnel de support par lequel une coupe peut commencer se traversée le long du moyen de support, pour être présentée séquentiellement à chaque station de chargement, avant qu'une coupe immédiatement précédente n'ait accompli sa traversée le long dudit moyen de support, le moyen unidirectionnel de support étant constitué d'une bande ou courroie sans fin (18) ayant des tronçons parallèles (24, 26) se déplaçant dans une direction, l'agencement étant tel qu'une coupe (14) libérée du magasin (12) puisse tomber entre lesdits tronçons parallèles (24, 26) de la bande ou courroie sans fin (18) et en vertu de la conicité usuelle de la coupe (14) et de l'espacement approprié desdits tronçons de la bande ou de la courroie (18), puisse être coincée entre eux pour être entraînée vers les stations de chargement et vers la station de décharge.

2. Distributeur automatique selon le revendication 1, caractérisé de plus en ce que la bande ou courroie sans fin est entraînée par une poulie d'entraînement (20) montée sur un arbre d'entraînement (52) entraîné par une unité à moteur électrique (54), l'arbre d'entraînement étant pourvu d'un certain nombre de cames (56) correspondant au nombre total de stations de chargement le long de la voie constituée par les tronçons parallèles de la bande ou courroie sans fin, la poulie d'entraînement (20) ayant une circonférence telle qu'un galet de chaque came soit agencé pour être actionné lorsqu'une coupe jetable atteint une station respective de chargement, les galets de came étant agencés en ordre pour interrompre l'opération de l'unité à moteur, pour actionner des relais respectifs (58) qui ont été présélectionnés pour être actionnés par l'utilisateur ayant enfoncé des boutons-poussoirs appropriés pour présélectionner la boisson requise, les relais étant associés à des temporisateurs respectifs de façon que l'unité à moteur soit remise en marche après un intervalle approprié de temps et également associés à un moyen pour forcer les unités appropriées du dispositif de distribution à distribuer des mesures de la matière en poudre ou en granulés.

3. Distributeur automatique selon l'une quelconque des revendications précédentes caractérisé de plus en ce que le magasin (12) de coupes jetables est constitué d'une tête pouvant être indexée ayant un certain nombre d'emplacements pour des piles séparées de coupes (14), des moyens étant prévus pour produire un mouvement d'avance de la tête lorsqu'un dispositif de détection détecte l'épuisement d'une pile de coupes (14) en une position (16) d'où les coupes (14) sont introduites tour à tour.

4. Distributeur automatique selon l'une quelconque des revendications précédentes caractérisé de plus en ce que les unités séparées du dispositif de distribution (28) pour les matières en poudre ou en granulés comprennent chacune une boîte de matière (30), une chambre de retenue (32) pour une mesure de la matière, un moyen pour doser une mesure correcte de la matière de la boîte de matière (30) dans ladite chambre de retenue (32) et des moyens pour ouvrir le dessous de ladite chambre de retenue (32) lorsqu'une coupe jetable (14) a été mise en position en dessous d'elle de façon que la mesure de matière puisse tomber de ladite chambre de retenue (32) sous la force de la gravité.

5. Distributeur automatique selon la revendication 4, caractérisé de plus en ce que le moyen pour distribuer une mesure correcte de la matière par la boîte de matière (30) dans la chambre de retenue (32) comprend un convoyeur à vis (34).

6. Distributeur automatique selon l'une quelconque des revendications 4 et 5, caractérisé de plus en ce que les moyens pour ouvrir le dessous de la chambre de retenue (32) de façon que la mesure de matière puisse en tomber sous la force de la gravité, sont constitués de moyens pour libérer une pression de blocage sur une extrémité inférieure d'un tube flexible (38) formant une partie inférieure de ladite chambre de retenue (32).

7. Distributeur automatique selon la revendication 6, caractérisé de plus en ce que les moyens pour libérer une pression de blocage à une extrémité inférieure du tube flexible (38) formant une partie inférieure de la chambre de retenue (32) sont actionnés par un solénoïde électrique (42).

FIG. 1

FIG. 2

_FIG. 3_

_FIG. 4_

2